# EUROPÄISCHE PATENTSCHRIFT

(11) **EP 2 357 145 B1**
(45) Veröffentlichungstag und Bekanntmachung des Hinweises auf die Patenterteilung: **24.10.2012**
(21) Anmeldenummer: 10195935.1
(22) Anmeldetag: 20.12.2010
(51) Int. Cl.: B65G 47/08, B65G 47/84

(54) **Vorrichtung zum Gruppieren von Stückgut**
Device for grouping articles
Dispositif pour grouper des articles

(30) Priorität: 11.02.2010 DE 102010000380
(43) Veröffentlichungstag der Anmeldung: 17.08.2011
(73) Patentinhaber: Krones AG, 93073 Neutraubling (DE)
(72) Erfinder: Rieser, Josef, 83080 Oberaudorf (DE)
(74) Vertreter: Benninger, Johannes

(56) Entgegenhaltungen:
- EP-A1- 1 247 769
- EP-A2- 0 283 670
- US-A- 3 194 382

## Beschreibung

Die vorliegende Erfindung betrifft eine Vorrichtung zum Gruppieren von Stückgut mit den Merkmalen des Oberbegriffs des unabhängigen Patentanspruchs 1.

Vorrichtungen zum Gruppieren von Stückgut, sog. Gruppiervorrichtungen, werden oftmals in Produktionsanlagen bei der Massenproduktion von Stückgütern eingesetzt. Die Güter befinden sich beim Transport zwischen den Behandlungs- oder Handhabungsmaschinen in einem mehr oder weniger geschlossenen Produktstrom. Dieser Produktstrom muss je nach Kapazität und Aufbau der Behandlungsmaschine in unterschiedliche Teilgruppen eingeteilt werden. Eine solche Einteilung ist unter anderem auch in der Lebensmittelindustrie, insbesondere in der Getränkeindustrie, notwendig. Dort wird unter anderem der Produktstrom von Getränkebehältern, wie z.B. Flaschen oder Dosen, vor einer Verpackungsmaschine in sinnvolle Einheiten gruppiert, um verkaufsgerechte Verpackungseinheiten zu bilden. Wenn im vorliegenden Zusammenhang von einer Gruppierung die Rede ist, so ist damit in aller Regel das Herstellen von Lücken in einem ununterbrochenen Produktstrom gemeint. Nach der Gruppierung läuft der Produktstrom zwar unverändert weiter, doch sind die einzelnen Artikel oder Stückgüter in mehrere Gruppen von jeweils zwei, vier, sechs oder auch mehr nahe beieinander befindlichen Einzelgütern zusammengefasst. Die Anzahl der Güter je Gruppe richtet sich nach den Verpackungsanforderungen der jeweiligen Verpackungsmaschine.

Im Stand der Technik sind bereits verschiedene Gruppiervorrichtungen für mehr oder weniger geschlossene Produktströme bekannt. So zeigt bspw. die DE 31 44 449 A1 eine Gruppiervorrichtung, deren Einteilerfinger aufweisende Traversen von unten in einen geschlossenen Produktstrom eingreifen, um diesen auf Grund unterschiedlicher Geschwindigkeiten der Förderbahn und der Traversen mit Lücken zu versehen und dadurch zu gruppieren. Die Traversen laufen dabei in einer geschlossenen Umlaufbahn um, die sich in einer Ebene befindet, die senkrecht auf der Transportebene steht. Bei einer Umstellung der Größe der Gruppeneinteilung muss allerdings die Maschine angehalten und mechanische Einstellungen und Anpassungsarbeiten vorgenommen werden.

Die DE 40 26 341 A1 zeigt weiterhin eine Gruppiereinrichtung zum Abtrennen von Behältergruppen aus einem Behälterstrom. Die an einem endlos umlaufenden Antriebselement befestigten Gruppierelemente sind mit Anschlag- und Stauflächen versehen. Die Gruppierelemente sind zwar einstellbar, so dass sie auf verschiedene Behälterdurchmesser anpassbar sind, jedoch kann mit dieser Vorrichtung die Anzahl der Behälter in einer gruppierten Einheit nur eingeschränkt variiert werden.

Aus der DE 30 29 508 C2 ist eine Vorrichtung zum Gruppieren von Werkstücken bekannt, bei der Speichen, an denen die Einteiler befestigt sind, an einer gemeinsamen Welle befestigt sind. Durch das Auf- und Abbewegen der Welle und die damit verbundene Abstandsveränderung von der Welle zur Transportebene kann die abzutrennende Pulklänge eingestellt werden. Eine Umstellung der Länge der abzutrennenden Stückgutreihen ist relativ aufwändig, da nicht nur der Abstand der Welle von der Transportebene, sondern auch die Länge der Umlaufführungen verändert werden muss. Eine flexible Gestaltung der Pulklängen innerhalb weniger Umdrehungen ist somit in der Praxis mit gewissen Schwierigkeiten verbunden.

Die DE 10 2004 042 474 A1 offenbart schließlich eine Vorrichtung zum Gruppieren von Stückgut, bei dem der Produktstrom mittels Einteilerleisten mit mehreren daran angeordneten Einteilerfingern gruppiert wird, die von unten her in den ununterbrochenen Produktstrom eintauchen und durch leichte Verzögerung folgender Artikel für die Abtrennung einer Gruppe sorgen.

Sollen die Einteiler an unterschiedliche Produkte und Artikelgrößen angepasst werden, insbesondere an verschiedene Artikelbreiten, so ist in der Regel eine Verstellung der Einteilerfinger an der Einteilerleiste erforderlich. Sofern die Einteilerfinger verschraubt sind, können diese Schraubbefestigunen gelöst, die Einteilerfinger in Längsrichtung auf der Einteilerleiste verschoben und in einer gewünschten veränderten Position wieder fixiert werden. Diese Verstellmaßnahmen sind jedoch als relativ zeitaufwändig anzusehen. Zudem erfordern sie eine exakte Vermessung der Positionen der Einteilerfinger. In diesem Zusammenhang können durch Mess- oder Handhabungsfehler Probleme entstehen, so dass nach der Montage unter Umständen die Einteilerfinger nicht exakt positioniert sind, was zu Störungen im Produktfluss der Behandlungsmaschine und unter ungünstigen Umständen auch zu Beschädigungen der Behälter oder Stückgüter führen kann.

Ein Ziel der vorliegenden Erfindung besteht darin, eine verbesserte Vorrichtung zum Gruppieren von Stückgütern zur Verfügung zu stellen, bei der alle Anpassungsarbeiten hinsichtlich veränderter Positionen der Einteilerfinger deutlich erleichtert sind, wobei gleichzeitig die Gefahr von Falschjustagen deutlich reduziert ist.

Dieses Ziel der Erfindung wird mit dem Gegenstand des unabhängigen Patentanspruchs erreicht. Merkmale vorteilhafter Weiterbildungen der Erfindung ergeben sich aus den abhängigen Ansprüchen. Zur Erreichung des genannten Ziels schlägt die Erfindung eine Vorrichtung zum Gruppieren von Stückgut oder Artikeln vor, die in einer im Wesentlichen ununterbrochenen Abfolge von einem Transportmittel entlang einer Transportebene zugeführt und durch mindestens einen von unten weitgehend senkrecht zur Transportebene in den Strom einführbaren Einteilerfinger längs zur Förderrichtung gruppiert werden. Der mindestens eine Einteilerfinger ist fest mit einer Einteilerleiste verbunden, die unterhalb der Transportebene bewegbar angeordnet und in einer definierten oder zeitlich und/oder räumlich veränderlichen Bewegungsbahn geführt ist. Es ist vorgesehen, dass der mindestens eine Einteilerfinger drehfest an einer Profilstange der Einteilerleiste und zwischen mindestens zwei Distanzelementen in seiner Lage fixiert ist. Vorzugsweise ist der mindestens eine Einteilerfinger mittels der Distanzelemente in einer definierten Position in Längserstreckungsrichtung der Profilstange fixiert. Je nach zu gruppierendem Güterstrom können auf jeder Einteilerleiste mehrere solcher Einteilerfinger angeordnet sein, die in diesem Fall in definierten Abständen zueinander angeordnet sind, was durch die Länge der zwischen den Einteilerfingern befindlichen Distanzelemente vorgebbar ist.

Die Distanzelemente und der mindestens eine Einteilerfinger bzw. die mehreren voneinander beabstandeten Einteilerfinger sind gemäß einer weiteren Ausführungsvariante der Erfindung in Längserstreckungsrichtung der Profilstange gegeneinander verspannt, bspw. durch Verschrauben.

Weiterhin kann vorgesehen sein, dass die Profilstange einen in Längserstreckungsrichtung regelmäßigen, jedoch nicht kreisrunden Querschnitt aufweist, der mit einer entsprechend dimensionierten und geformten Aufnahme eines Sockelbereichs des mindestens einen Einteilerfingers korrespondiert. Dadurch, dass der Querschnitt der Profilstange nicht rund ist, können die Einteilerfinger aufgrund ihres korrespondierenden Durchbruchs in drehfester Lage auf die Profilstange geschoben und dort fixiert werden, ohne dass sie auf der Profilstange verdreht werden können. Als Profilstange eignet sich bspw. ein Mehrkantprofil wie ein Vierkantprofil, ein Sechs- oder Achtkantprofil, ein zylindrisches Profil mit durchgängiger Rechtecknut oder durchgängigem Rechteckkeil. Jedoch kann die Profilstange auch ein Vielnutprofil oder ein Polygonprofil, ein ovales Profil o. dgl. aufweisen, während die Aufnahmen der Sockelbereich der Einteilerfinger entsprechend geformt sein müssen, um eine spielfreie Befestigung der Einteilerfinger auf der Profilstange der Einteilerleiste zu ermöglichen. Vorzugsweise weist zudem jeder Einteilerfinger im Sockelbereich eine definierte Stärke mit zueinander parallelen Anlageflächen für die daran angrenzenden Distanzelemente auf. Selbstverständlich sind auch abgeschrägte Anlageflächen möglich, doch sind zueinander parallele Anlageflächen einfacher in der Handhabung.

Zudem können die Distanzelemente jeweils durch hohlzylindrische oder mehreckige Rohrabschnitte definierter Länge mit jeweils zueinander parallelen Stirnseiten gebildet sein. Auch die Distanzelemente können wahlweise abgeschrägte und an die Anlageflächen der Einteilerfinger angepasste Stirnflächen aufweisen, doch ist dies aufgrund der universellen Austauschbarkeit der Distanzelemente nicht unbedingt sinnvoll. Vorzugsweise können die Distanzelemente weitgehend spielfrei mit der Profilstange verbunden werden. Wahlweise können sie zudem mit dieser verstemmt werden, nachdem die Einteilerfinger montiert sind.

Durch die Möglichkeit der Anordnung mehrerer Einteilerfinger in definierbaren Positionen und Abständen voneinander, die mittels gleicher oder unterschiedlicher Distanzelemente, die an der Einteilerleiste angeordnet und auf die Profilstange aufgeschoben sind, in jeweils wählbarer Länge voneinander beabstandet sind, können unterschiedliche Einteilerleisten zur Verfügung gestellt werden, die jeweils exakt an die zu gruppierenden Artikel und Größen der Stückgüter angepasst sind. Wahlweise können auch mehrere verschiedene Einteilerleisten fertig montiert und je nach Bedarf als komplette Einheit ausgetauscht werden.

Die vorliegende Erfindung bezieht sich auch auf eine bewegliche Einteilerleiste mit mindestens einem daran befestigten Einteilerfinger, die insbesondere Bestandteil einer Vorrichtung zum Gruppieren von Stückgut gemäß einer der zuvor beschriebenen Ausführungsvarianten ist. Der mindestens eine Einteilerfinger ist dabei drehfest an einer Profilstange der Einteilerleiste und zwischen mindestens zwei Distanzelementen definierbarer Länge in seiner Lage fixiert.

Unter Berücksichtigung aller Einsatzmöglichkeiten der erfindungsgemäßen Gruppiervorrichtung umfasst die vorliegende Erfindung auch ein Verfahren zur Bereitstellung jeweils passender Einteilerleisten, die zuvor in eine vorbereitete Konfiguration gebracht worden sind und zum Austausch bereitgehalten werden können. Sobald eine Produktumstellung erfolgt, die mit einer Variation der Behältergröße oder der Behälterabmessung einhergeht, kann es notwendig sein, einen zuvor verwendeten Abstand von Einteilerfingern zu variieren. Um eine Zerlegung der Einteilerleisten zu vermeiden, können ggf. alle Einteilerleisten komplett ausgetauscht werden, um den richtigen Abstand der Einteilerfinger voneinander durch Wechsel der Einteilerleisten zu erhalten.

Bei der Vormontage der Einteilerleisten kann es ggf. sinnvoll sein, unterschiedlich gekennzeichnete Distanzelemente in unterschiedlichen Längen zur Verfügung zu halten, um eine schnelle Montage zu ermöglichen. So können unterschiedliche Längen der Distanzelemente bspw. durch unterschiedliche Farben unterschieden werden. Auch ist es möglich, die rohrförmigen Distanzelemente nach ihrer Montage auf der Profilstange mit dieser fest zu verbinden, bspw. durch einen Verstemmungsvorgang, damit der Maschinenführer die gewünschten Abstände der Einteilerfinger ausschließlich durch Austausch der kompletten Einteilerleiste variieren kann, nicht jedoch durch Zerlegen und Neukonfigurieren der Einteilerleisten.

Weiterhin kann vorgesehen sein, dass unterschiedlich lange Distanzelemente jeweils unterschiedliche optische Kennzeichnungen bzw. Farbmarkierungen aufweisen. Auf diese Weise kann vermieden werden, dass bei der Konfiguration der Einteilerleisten bzw. bei deren Zusammenbau falsche Distanzelemente gewählt werden. Zudem können bei einer sinnvollen Variante der beweglichen Einteilerleiste die Distanzelemente und/oder die Einteilerleiste selbst je nach zu verarbeitendem Stückgut unterschiedliche optische Kennzeichnungen bzw. Farbmarkierungen aufweisen. Auf diese Weise können bezogen auf das zu verarbeitende Produkt die Distanzhülsen und/oder die gesamte, jeweils ein austauschbares Modul bildende Einteilerleiste optisch gekennzeichnet werden. Beispielsweise eben durch Farbe, durch eine optisch erkennbare Markierung oder Ähnliches.

Die Erfindung wird nachfolgend anhand von Ausführungsbeispielen unter Bezugnahme auf die beiliegenden Zeichnungen näher erläutert. Die Figuren illustrieren und verdeutlichen nicht einschränkend zu verstehende Ausführungsbeispiele der vorliegenden Erfindung in ihren Details und Funktionen.
Fig. 1 zeigt eine schematische Draufsicht auf eine Gruppiervorrichtung.
Fig. 2 zeigt eine Seitenansicht der Gruppiervorrichtung gemäß Fig. 1.
Fig. 3 zeigt eine schematische Perspektivansicht einer Einteilerleiste der Gruppiervorrichtung.
Fig. 4 zeigt eine Detailansicht der Einteilerleiste mit mehreren daran befestigten Einteilerfingern.
Fig. 5. zeigt eine Perspektivansicht eines Einteilerfingers.
Fig. 6 zeigt eine Draufsicht des Einteilerfingers.

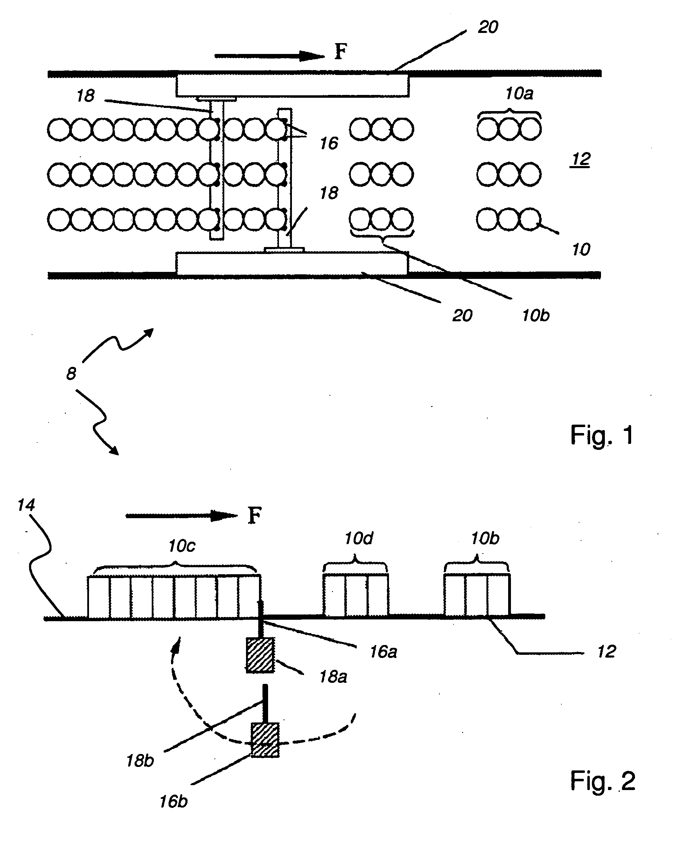

Die schematische Darstellung der Fig. 1 zeigt bereits gruppierte und sich noch im Stückgutstrom befindliche Stückgüter 10, die bspw. durch Getränkebehälter, Flaschen oder Dosen gebildet sein können. Die Stückgüter 10 werden aufrecht stehend auf einem Transportmittel 12 mehrreihig durch Reibschluss in Förderrichtung F transportiert. Die Auflageebene für die Stückgüter 10 bildet gleichzeitig die Transportebene 14 (vgl. Fig. 2). Zum Gruppieren stehen Einteilerfinger 16 bereit, die sich auf Einteilerleisten 18 befinden. Diese sind mit den Stückgütern 10 durch die Transportebene 14 hindurch von unten in Eingriff bringbar. Das Transportmittel 12 wird bspw. durch mehrere mit seitlichen Zwischenabständen parallel verlaufende Förderbänder gebildet, wodurch für die Einteilerfinger 16 ein freier Durchgriff gegeben ist. Im vorliegenden Fall verfügt die Gruppiervorrichtung 8 über zwei unabhängige Gruppen von Einteilerfingern 16, die auf zwei nicht miteinander mechanisch verbundenen Einteilerleisten 18 angeordnet sind. Zur besseren Unterscheidung sind diese Bauteile in der Fig. 2 mit den Bezugsziffern 16a, 16b, 18a und 18b gekennzeichnet. Die Einteilerleisten 18 ihrerseits sind als parallel zur Transportebene 14 verlaufende Kragarme ausgebildet, die ihre Befestigung an jeweils einem eigenen vertikalen Kreuztisch 20 seitlich außerhalb und unterhalb des Transportmittels 12 finden.

Die schematische Seitenansicht der Fig. 2 verdeutlicht, wie ein Gruppiervorgang abläuft. Die Einteilerfinger 16a auf der Einteilerleiste 18a werden gerade von unten in Eingriff mit einem im Wesentlichen geschlossenen Stückgutstrom 10c gebracht. Die Einteilerfinger 16b der in Förderrichtung F um eine Stückgutgruppenlänge vorauslaufenden Einteilerleiste 18b standen zuvor im Eingriff mit bereits gruppierten Stückgütern 10d. In dieser Phase bewegen sich die Einteilerfinger 16a und die Einteilerleiste 18a langsamer als das Transportmittel 12, d.h. das Stückgut im Stückgutstrom 10c wird an die vorauslaufenden Einteilerfinger 16a gedrängt. Durch die Differenzgeschwindigkeit des Transportmittels 12 und der Einteilerleiste 18b bewegen sich die bereits abgetrennten Stückgutgruppen 10b und 10d schneller als der von den Einteilerfingern 16a noch gebremste Stückgutstrom 10c. Dadurch entstehen die dargestellten Abstände zwischen den einzelnen Stückgutgruppen 10d und 10b, die bereits von dem im Wesentlichen geschlossenen Stückgutstrom 10c separiert sind. Diese Abstände entsprechen in Addition mit der Länge der Stückgutgruppen bspw. dem Teilungsmaß einer nachgeordneten Verpackungsmaschine, die Stückgutgruppen in Folien-oder Kartonzuschnitte einhüllt. Ist die Abtrennung der Stückgutgruppe 10d nach Erreichen des gewünschten Abstandes vom Stückgutstrom 10c vollständig erreicht, so wird die Einteilerleiste 18b während einer ggf. kurzzeitig beschleunigten Vorwärtsbewegung aus der Transportebene 14 nach unten heraus gefahren, wie dies in Fig. 2 angedeutet ist. Diese Einteilerfinger 16b werden anschließend wieder von unten in den Stückgutstrom 10c eingefahren, wodurch sich auf Grund der Differenzgeschwindigkeit des Transportmittels 12 und der Einteilerleiste 18b nun eine neue Stückgutgruppe am vorlaufenden Ende vom im Wesentlichen geschlossenen Stückgutstrom 10c abzulösen beginnen kann. Um die jeweiligen Gruppierungen des Stückgutstroms 10c durchführen zu können, bewegt sich die Einteilerleiste 18b mit den Einteilerfingern 16b entgegen der Förderrichtung F der Behälter unterhalb der Einteilerleiste 18a zurück zu einer Ausgangsposition, an der die Einteilerfinger 16b unter Umkehrung ihrer Bewegungsrichtung, die nun wieder parallel zur Transportrichtung F erfolgt, von unten durch die Transportebene 14 in den Stückgutstrom 10c eintauchen können.

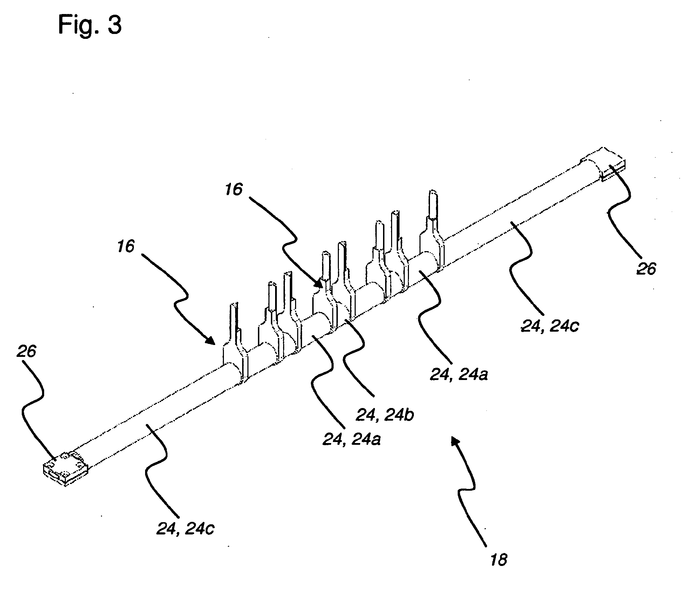

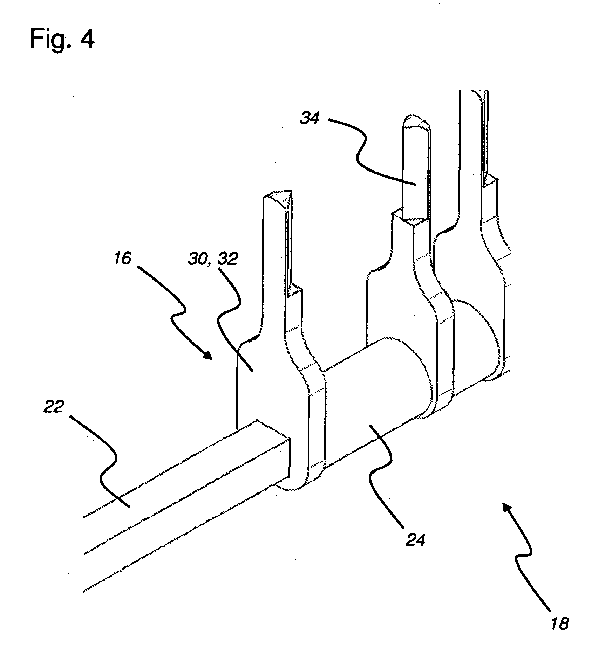

Die schematische Perspektivansicht der Fig. 3 zeigt eine Einteilerleiste 18 der Gruppiervorrichtung 8 mit insgesamt acht daran befestigten Einteilerfingern 16. Die Detailansicht der Fig. 4 zeigt nochmals die Einteilerleiste 18 mit mehreren daran befestigten Einteilerfingern 16. Wie anhand der Figuren 3 und 4 erkennbar ist, sind die Einteilerfinger 16 drehfest an einer Profilstange 22 und jeweils zwischen mindestens zwei Distanzelementen 24 in Ihrer Lage fixiert. Auf diese Weise ist jeder Einteilerfinger 16 mittels der Distanzelemente 24 in einer definierten Position in Längserstreckungsrichtung der Profilstange 24 fixiert. Je nach zu gruppierendem Güterstrom 10 können auf jeder Einteilerleiste 18 unterschiedlich viele solcher Einteilerfinger 16 angeordnet sein, die in diesem Fall in definierten Abständen zueinander angeordnet sind, was durch die Länge der zwischen den Einteilerfingern 16 befindlichen Distanzelemente 24 vorgegeben ist.

Wie in Fig. 3 angedeutet ist, können die Distanzelemente 24 und die mehreren voneinander beabstandeten Einteilerfinger 16 in Längserstreckungsrichtung der Profilstange 22 gegeneinander verspannt sein, bspw. durch Verschrauben von endseitigen Einspannabschnitten 26.

Entsprechend dem dargestellten Ausführungsbeispiel weist die Profilstange 22 einen in Längserstreckungsrichtung regelmäßigen quadratischen Querschnitt auf, der mit einer entsprechend dimensionierten und geformten Aufnahme 28 eines Sockelbereichs 30 der Einteilerfinger 16 korrespondiert. Dadurch, dass der Querschnitt der Profilstange 22 nicht rund, sondern vierkantig ist, können die Einteilerfinger 16 aufgrund ihres korrespondierenden Durchbruchs 28 in drehfester Lage auf die Profilstange 22 geschoben und dort fixiert werden, ohne dass sie auf der Profilstange 22 verdreht werden können. Die Abmessungen der Aufnahmen 28 der Einteilerfinger 16 und der Profilstange 22 sind so aufeinander abzustimmen, dass eine spielfreie Befestigung der Einteilerfinger 16 auf der Profilstange 22 der Einteilerleiste 18 gewährleistet ist. Vorzugsweise weist zudem jeder Einteilerfinger 16 im Sockelbereich 30 eine definierte Stärke mit zueinander parallelen Anlageflächen 32 für die daran angrenzenden Distanzelemente 24 auf.

Die Distanzelemente 24 sind jeweils durch hohlzylindrische Rohrabschnitte definierter Länge mit jeweils zueinander parallelen Stirnseiten gebildet. Vorzugsweise sind die Distanzelemente 24 weitgehend spielfrei mit der Profilstange 22 verbunden. Wahlweise können sie mit dieser verstemmt werden, nachdem die Einteilerfinger 16 montiert sind.

Durch die Möglichkeit der Anordnung mehrerer Einteilerfinger 16 in definierbaren Positionen und Abständen voneinander, die mittels gleicher oder unterschiedlicher Distanzelemente 24, die an der Einteilerleiste 18 angeordnet und auf die Profilstange 22 aufgeschoben sind, in jeweils wählbarer Länge voneinander beabstandet montiert sind, können wahlweise unterschiedliche Einteilerleisten 18 zur Verfügung gestellt werden, die jeweils exakt an die zu gruppierenden Artikel und Größen der Stückgüter 10 angepasst sind. Wahlweise können auch mehrere verschiedene Einteilerleisten 18 fertig montiert und je nach Bedarf als komplette Einheit ausgetauscht werden.

Es können verschiedene passende Einteilerleisten 18 vorhanden sein, die zuvor in eine vorbereitete Konfiguration gebracht worden sind und zum Austausch bereitgehalten werden können. Sobald eine Produktumstellung erfolgt, die mit einer Variation der Behältergröße oder der Behälterabmessung einhergeht, kann es notwendig sein, einen zuvor verwendeten Abstand von Einteilerfingern 16 zu variieren. Um eine Zerlegung der Einteilerleisten 18 zu vermeiden, können ggf. alle Einteilerleisten 18 innerhalb einer Gruppiermaschine komplett ausgetauscht werden, um den richtigen Abstand der Einteilerfinger 16 voneinander durch Wechsel der Einteilerleisten 18 zu erhalten.

Bei der Vormontage der Einteilerleisten 18 kann es ggf. sinnvoll sein, unterschiedlich gekennzeichnete Distanzelemente 24 in unterschiedlichen Längen zur Verfügung zu halten, um eine schnelle Montage zu ermöglichen. So können unterschiedliche Längen der Distanzelemente 24 bspw. durch unterschiedliche Farben unterschieden werden. Auch ist es möglich, die rohrförmigen Distanzelemente 24 nach ihrer Montage auf der Profilstange 22 mit dieser fest zu verbinden, bspw. durch einen Verstemmungsvorgang, damit der Maschinenführer die gewünschten Abstände der Einteilerfinger 16 ausschließlich durch Austausch der kompletten Einteilerleiste 18 variieren kann, nicht jedoch durch Zerlegen und Neukonfigurieren der Einteilerleisten 18. So weist bspw. die Einteilerleiste gemäß Fig. 3 drei unterschiedliche Längen von Distanzelementen 24 auf. Während das zwischen zwei benachbarten Einteilerfingern 16 für eine Produktreihe befindliche Distanzelement 24a etwas länger ist als das zwischen benachbarten Einteilerfingern 16 für benachbarte Produktreihen befindliche Distanzelement 24b, sind die beiden seitlichen Distanzelemente 24c deutlich länger ausgeführt. Die unterschiedlichen Längen der Distanzelemente 24 können allerdings bei einer größeren Anzahl von parallelen Gassen wiederum variieren. So ist es durchaus möglich, dass die Distanzelemente 24 bei einer Anzahl von beispielsweise zehn oder mehr parallelen Gassen für die transportierten Stückgüter gleich lang oder annähernd gleich lang sein können.

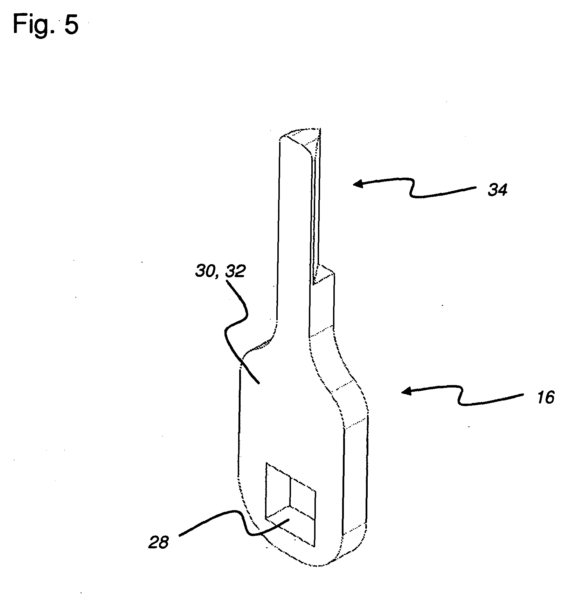

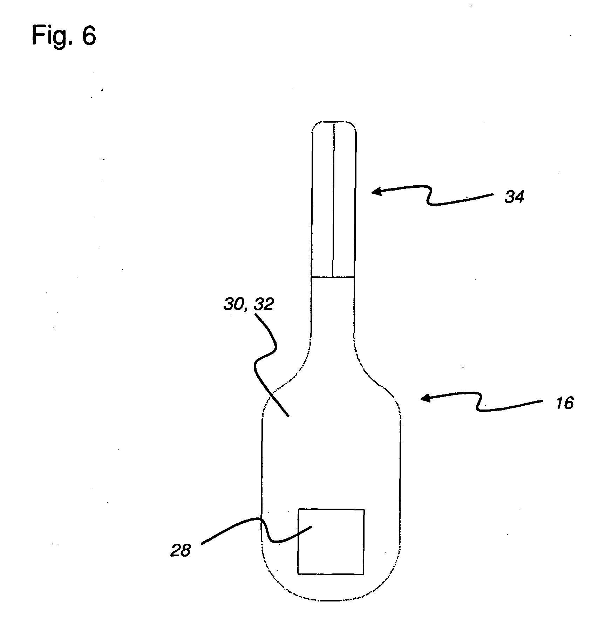

Die in den Figuren 5 und 6 erkennbaren Trennabschnitte 34 der Einteilerfinger 16 können, wie dargestellt, wahlweise einen dreieckförmigen Querschnitt aufweisen. Der Querschnitt und die Kontur der Abschnitte 34 richten sich generell nach der Kontur der zu trennenden bzw. zu gruppierenden Stückgüter 10. Vorzugsweise kann der Querschnitt und die Kontur der Trennabschnitte 34 an die äußere Form der zu gruppierenden Stückgüter angepasst sein. So ist es bspw. sinnvoll, bei relativ biegeweichen Flaschen mit dünnen PET-Wandungen die Trennabschnitte 34 so an die äußere Flaschenkontur anzupassen, dass sich der Einteilerfinger 16 mit einer möglichst großen Kontaktfläche an die Außenmantelfläche der Flaschen anschmiegt.

### Bezugszeichenliste

- 8: Gruppiervorrichtung
- 10: Stückgut, Stückgüter
- 10c: ununterbrochener Stückgutstrom
- 10b, 10a, 10d: gruppierte Stückgüter
- 12: Transportmittel
- 14: Transportebene
- 16, 16a, 16b: Einteilerfinger
- 18, 18a, 18b: Einteilerleiste
- 20: Kreuztisch
- 22: Profilstange
- 24: Distanzelement
- 24a, 24b, 24c: unterschiedlich lange Distanzelemente
- 26: Einspannabschnitt
- 28: Aufnahme. Durchbruch
- 30: Sockelbereich
- 32: Anlagefläche
- 34: Trennabschnitt
- F: Förderrichtung, Transportrichtung

## Patentansprüche

1. Vorrichtung (8) zum Gruppieren von Stückgut (10), das in einer im Wesentlichen ununterbrochenen Abfolge von einem Transportmittel (12) entlang einer Transportebene (14) zugeführt und durch mindestens einen von unten weitgehend senkrecht zur Transportebene (14) in den Strom einführbaren Einteilerfinger (16) längs zur Förderrichtung (F) gruppiert wird, wobei der mindestens eine Einteilerfinger (16) fest mit einer Einteilerleiste (18) verbunden ist, die unterhalb der Transportebene (14) bewegbar angeordnet und in einer definierten oder zeitlich und/oder räumlich veränderlichen Bewegungsbahn geführt ist, **dadurch gekennzeichnet, dass** der mindestens eine Einteilerfinger (16) drehfest an einer Profilstange (22) der Einteilerleiste (18) und zwischen mindestens zwei Distanzelementen (24) in seiner Lage fixiert ist.

2. Vorrichtung nach Anspruch 1, bei welcher der mindestens eine Einteilerfinger (16) mittels der Distanzelemente (24) in einer definierten Position in Längserstreckungsrichtung der Profilstange (22) fixiert ist.

3. Vorrichtung nach Anspruch 1 oder 2, bei der die Distanzelemente (24) und der mindestens eine Einteilerfinger (16) in Längserstreckungsrichtung der Profilstange (22) gegeneinander verspannt sind.

4. Vorrichtung nach einem der Ansprüche 1 bis 3, bei der die Profilstange (22) einen in Längserstreckungsrichtung regelmäßigen, nicht kreisrunden Querschnitt aufweist, der mit einer entsprechend dimensionierten und geformten Aufnahme (28) eines Sockelbereichs (30) des mindestens einen Einteilerfingers (16) korrespondiert.

5. Vorrichtung nach Anspruch 4, bei der die Profilstange (22) und die korrespondierende Aufnahme (28) im Sockelbereich (30) des mindestens einen Einteilerfingers (16) einen mehrkantigen, einen ovalen, einen polygonförmigen oder anders geformten Querschnitt aufweisen.

6. Vorrichtung nach Anspruch 4 oder 5, bei welcher der mindestens eine Einteilerfinger (16) im Sockelbereich (30) eine definierte Stärke mit zueinander parallelen Anlageflächen (32) für die daran angrenzenden Distanzelemente (24) aufweist.

7. Vorrichtung nach einem der Ansprüche 1 bis 6, bei der die Distanzelemente (24) jeweils durch hohlzylindrische oder mehreckige Rohrabschnitte definierter Länge mit jeweils zueinander parallelen Stirnseiten gebildet sind.

8. Vorrichtung nach einem der Ansprüche 1 bis 7, bei der die Distanzelemente (24) weitgehend spielfrei mit der Profilstange (22) verbunden, insbesondere mit dieser verstemmt sind.

9. Vorrichtung nach einem der Ansprüche 1 bis 8, bei der mehrere Einteilerfinger (16) in definierbaren Positionen und Abständen voneinander mittels gleicher oder unterschiedlicher Distanzelemente (24) in jeweils wählbarer Länge an der Einteilerleiste (18) angeordnet sind.

10. Vorrichtung nach einem der Ansprüche 1 bis 9, bei der unterschiedlich lange Distanzelemente (24) jeweils unterschiedliche optische Kennzeichnungen bzw. Farbmarkierungen aufweisen.

11. Bewegliche Einteilerleiste (18) mit mindestens einem daran befestigten Einteilerfinger (16), die insbesondere Bestandteil einer Vorrichtung (8) zum Gruppieren von Stückgut (10) gemäß einem der Ansprüche 1 bis 10 ist, **dadurch gekennzeichnet, dass** der mindestens eine Einteilerfinger (16) drehfest an einer Profilstange (22) der Einteilerleiste (18) und zwischen mindestens zwei Distanzelementen (24) definierbarer Länge in seiner Lage fixiert ist.

12. Bewegliche Einteilerleiste (18) nach Anspruch 11, bei der die Distanzelemente (24) und/oder die Einteilerleiste (18) selbst je nach zu verarbeitendem Stückgut (10) unterschiedliche optische Kennzeichnungen bzw. Farbmarkierungen aufweisen.

## Claims

1. Device (8) for grouping piece good (10), whereby the piece good is fed along a transport plane (14) through a transport means (12) in a substantially uninterrupted sequence, and whereby the piece good is grouped along the conveying direction (F) by the means of at least one spacing finger (16), which can be inserted into the stream of piece goods from below, largely perpendicular to the transport plane (14), wherein the at least one spacing finger (16) is tightly attached to a spacing rail (18), the spacing rail (18) being movably disposed below the transport plane (14) and the spacing rail (18) being guided in a defined or temporally and / or spatially varying movement path, **characterized in that** the at least one spacing finger (16) is fixed torque proof to a profile bar (22) of the spacing rail (18) and that the at least one spacing finger (16) is fixed at a defined position between at least two spacer elements (24).

2. Device according to claim 1, wherein the at least one spacing finger (16) is fixed by the spacer elements (24) at a defined position in a longitudinal extension direction of the profile bar (22).

3. Device according to claim 1 or 2, wherein the spacer elements (24) and the at least one spacing finger (16) are clamped together in the longitudinal extension direction of the profile bar (22).

4. Device according to one of the claims 1 to 3, wherein the profile bar (22) has a regular, non-circular cross-section in its longitudinal extension direction, which corresponds to an appropriately sized and shaped receptacle (28) of a base portion (30) of the at least one spacing finger (16).

5. Device according to claim 4, wherein the profile bar (22) and the corresponding receptacle (28) has a polygonal, an oval, a polygon- shaped or otherwise shaped cross- section in the base region (30) of the at least one spacing finger (16).

6. Device according to claim 4 or 5, wherein the at least one spacing finger (16) has a defined thickness in the base region (30) with mutually parallel contact surfaces (32) for the adjacent spacer elements (24).

7. Device according to one of the claims 1 to 6, wherein the spacer elements (24) are each formed by hollow- cylindrical or polygonal tubular sections of defined length, each with mutually parallel end faces.

8. Device according to one of the claims 1 to 7, wherein the spacer elements (24) are connected to the profile bar (22) almost without any free play, especially wherein the spacer elements (24) are caulked with the profile bar (22).

9. Device according to one of the claims 1 to 8, whereby same or different spacer elements (24), each selectable in length and attached to the spacing rail (18), are used to arrange several spacing fingers (16) at defined positions and with defined distances between each other.

10. Device according to one of the claims 1 to 9, wherein spacer elements (24) of different length each have different optical identifications or color markings.

11. Movable spacing rail (18) with at least one spacing finger (16) attached thereto, the spacing rail (18) especially being part of a device (8) for grouping piece goods (10) according to one of the claims 1 to 10, **characterized in that** the at least one spacing finger (16) is fixed torque proof to a profile bar (22) of the der spacing rail (18) and that the at least one spacing finger (16) is fixed in a defined position between at least two spacer elements (24).

12. Movable spacing rail (18) according to claim 11, wherein the spacer elements (24) and / or the spacing rail (18) each have different optical identifications or color markings, depending on the processed piece good (10).

## Revendications

1. Dispositif (8) de groupement d'articles (10) qui sont amenés en une suite pour l'essentiel ininterrompue par un moyen de transport (12) suivant un plan de transport (14) et sont groupés longitudinalement à la direction de transport (F) par au moins un doigt de division (16) apte à être introduit d'en bas dans le flux, dans une large mesure perpendiculairement au plan de transport (14), ledit au moins un doigt de division (16) étant solidaire d'une baguette de division (18) qui est disposée de manière déplaçable au-dessous du plan de transport (14) et est guidée dans une trajectoire de mouvement définie ou variable temporellement et/ou dans l'espace, **caractérisé par le fait que** ledit au moins un doigt de division (16) est fixé d'une manière immobile en rotation sur une tige profilée (22) de ladite baguette de division (18) et dans sa position entre au moins deux éléments d'écartement (24).

2. Dispositif selon la revendication 1, dans lequel ledit au moins un doigt de division (16) est fixé au moyen des éléments d'écartement (24) dans une position définie suivant la direction d'extension longitudinale de ladite tige profilée (22).

3. Dispositif selon la revendication 1 ou 2, dans lequel lesdits éléments d'écartement (24) et ledit au moins un doigt de division (16) sont serrés les uns contre les autres suivant la direction d'extension longitudinale de ladite tige profilée (22).

4. Dispositif selon l'une quelconque des revendications 1 à 3, dans lequel ladite tige profilée (22) présente une section non ronde régulière suivant la direction d'extension longitudinale, qui correspond à un logement (28) d'une zone d'embase (30) dudit au moins un doigt de division (16), lequel est dimensionné et formé de manière correspondante.

5. Dispositif selon la revendication 4, dans lequel ladite tige profilée (22) et ledit logement (28) correspondant dans la zone d'embase (30) dudit au moins un doigt de division (16) présentent une section à plusieurs arêtes, ovale, polygonale ou formée d'une autre manière.

6. Dispositif selon la revendication 4 ou 5, dans lequel ledit au moins un doigt de division (16) présente, dans la zone d'embase (30), une épaisseur définie avec des surfaces d'appui (32) parallèles entre elles pour les éléments d'écartement (24) y contigus.

7. Dispositif selon l'une quelconque des revendications 1 à 6, dans lequel lesdits éléments d'écartement (24) sont formés chacun par des sections tubulaires cylindriques creuses ou polygonales de longueur définie, avec des faces frontales respectivement parallèles entre elles.

8. Dispositif selon l'une quelconque des revendications 1 à 7, dans lequel les éléments d'écartement (24) sont reliés dans une large mesure sans jeu à ladite tige profilée (22), en particulier matés avec celle-ci.

9. Dispositif selon l'une quelconque des revendications 1 à 8, dans lequel plusieurs doigts de division (16) sont disposés sur ladite baguette de division (18) dans des positions et distances définissables les uns par rapport aux autres, par l'intermédiaire d'éléments d'écartement (24) identiques ou différents, dans une longueur respectivement choisissable.

10. Dispositif selon l'une quelconque des revendications 1 à 9, dans lequel des éléments d'écartement (24) de longueur différente présentent chacun des repères optiques ou bien marquages colorés différents.

11. Baguette mobile de division (18) comprenant au moins un doigt de division (16) y fixé, qui, en particulier, est un composant d'un dispositif (8) de groupement d'articles (10) selon l'une quelconque des revendications 1 à 10, **caractérisée par le fait que** ledit au moins un doigt de division (16) est fixé d'une manière immobile en rotation sur une tige profilée (22) de ladite baguette de division (18) et dans sa position entre au moins deux éléments d'écartement (24) de longueur définissable.

12. Baguette mobile de division (18) selon la revendication 11, dans laquelle lesdits éléments d'écartement (24) et/ou ladite baguette de division (18) présentent eux-mêmes, selon les articles (10) à traiter, des repères optiques ou bien marquages colorés différents.
